# NEUE EUROPÄISCHE PATENTSCHRIFT

(11) **EP 1 186 208 B2**
(45) Veröffentlichungstag und Bekanntmachung des Hinweises auf die Entscheidung über den Einspruch: **10.10.2007**
(45) Hinweis auf die Patenterteilung: 05.02.2003
(21) Anmeldenummer: 00947784.5
(22) Anmeldetag: 08.06.2000
(51) Int. Cl.: H05B 6/04, H02M 7/5387

(54) **ANWENDUNG VON SELBSTGEFÜHRTEN SPANNUNGSZWISCHENKREISUMRICHTERN ZUR SPEISUNG VON INDUKTIONSÖFEN**
USE OF SELF-COMMUTATED VOLTAGE INTERMEDIATE-CIRCUIT CONVERTER FOR THE FEEDING OF INDUCTION FURNACES
UTILISATION DE CONVERTISSEURS A CIRCUIT INTERMEDIAIRE DE TENSION A COMMUTATION AUTOMATIQUE POUR L'ALIMENTATION DE FOURS A INDUCTION

(30) Priorität: 09.06.1999 DE 19926198
(43) Veröffentlichungstag der Anmeldung: 13.03.2002
(73) Patentinhaber: Otto Junker GmbH, 52152 Simmerath (DE)
(72) Erfinder: JANSEN, Uwe, D-52152 Simmerath (DE)
(74) Vertreter: Schüll, Gottfried Hubert
(86) Internationale Anmeldenummer: PCT/DE2000/001827
(87) Internationale Veröffentlichungsnummer: WO 2000/078098

(56) Entgegenhaltungen:
- WO-A-00/51410
- WO-A-95/22237
- WO-A-95/24817
- WO-A-95/26619
- JP-A- 10 098 871
- US-A- 3 462 672
- US-A- 5 889 812

## Beschreibung

Die Erfindung betrifft Umrichter, wie sie in Anlagen zum induktiven Schmelzen und zum induktiven Erwärmen eingesetzt werden. Solche Umrichter bestehen aus einem netzgeführten Gleichrichter sowie einem lastseitigen Wechselrichter. Induktionsöfen und Induktoren für solche Zwecke weisen prinzipbedingt einen niedrigen Leistungsfaktor auf. Daher wird die Last in der Regel mittels Kondensatoren kompensiert. Solche Anlagen werden über einen Umrichter aus dem Netz versorgt. Der Umrichter ermöglicht eine Wandlung der Phasenzahl sowie die Wandlung der Frequenz auf einen für den Prozeß optimalen Wert.

Seit langem bekannt sind lastgeführte Umrichter wie der Parallelschwingkreisumrichter und der Serienschwingkreisumrichter.

Beim Parallelschwingkreisumrichter bilden Kompensationskondensatoren und Last einen Parallelschwingkreis, der von einem Stromzwischenkreisumrichter gespeist wird. Die Leistungsregelung erfolgt zumindest in gewissen Arbeitsbereichen durch Steuerung eines eingangsseitigen Thyristorgleichrichters.

Beim Serienschwingkreisumrichter speist ein Spannungszwischenkreisumrichter die durch einen Reihenkondensator kompensierte Last. Die Leistungsregelung erfolgt durch Variieren der Ausgangsfrequenz.

Aus der zur Bildung des Oberbegriffs des vorliegenden Anspruchs 1 herangezogenen, WO 95 22237A ist es bekannt, dass insbesondere bei hohen Frequenzen (> 100kHz) Schaltungen mit Resonanztransformation eingesetzt werden, bei denen ein Wechselrichter mit Spannungszwischenkreis über eine Entkopplungsdrossel auf eine parallzt kompensierte Last arbeitet. Die Schaltfrequenz des Wechselrichters ist hierbei gleich der Frequenz des Ausgangsstroms. Die Leistungsregelung kann hier wie bei Serienschwingkreiswechselrichtern durch Variation der Ausgangsfrequenz oder durch Steuerung des Gleichrichters erfolgen. Der Einsatz abschaltbarer Leistungshalbleiter ist sowohl bei Schaltungen mit Resonanztransformation als auch bei Parallel- oder Serienschwingkreisumrichtern bekannt. Dies erfolgt bei den bekannten Beispielen mit dem Ziel, höhere Frequenzen zu erreichen,als dies beim Einsatz von Thyristoren möglich ist.

Aus der nachveröffentlichten EP 1 175 814 ist ein Resonanzfrequenz-Induktionsofensystem mit kapazitiver Spannungsteilung bekannt.

Für Anwendungen, bei denen der Leistungsfaktor des Induktors recht hoch ist, etwa bei Rinneninduktoren, kann auch auf die Kompensation der Last verzichtet und ein selbstgeführter Wechselrichter mit Spannungszwischenkreis eingesetzt werden.

Als Nachteil des Parallelschwingkreisumrichters muß genannt werden, daß der netzseitige Leistungsfaktor sinkt. wenn zur Leistungsregelung der Gleichrichter mit großem Steuerwinkel betrieben werden muß. Ein weiterer Nachteil ist der hohe Aufwand für die Glättungsdrossel sowie die hohen Verluste, die in der Glättungsdrossel entstehen. Weiterhin ist es von Nachteil, daß es bei einem solchen Umrichter nur mit hohem Aufwand möglich ist, Anlagen zu bauen, bei denen ein Umrichter mehrere Lasten mit getrennt einstellbarer Leistung versorgt.

Wesentlicher Nachteil des Serienschwingkreisumrichters ist, daß auf Grund der Reihenkompensation der hohe Ofenstrom zum Umrichter geführt werden muß und die Ventile des Umrichters für den Ofenstrom ausgelegt sein müssen. Auch auf der Eingangsseite des Umrichters fließen hohe Ströme, da die Zwischenkreisspannung beim Serienschwingkreisumrichter in der Regel kleiner gewählt werden muß als bei anderen Konzepten. Auslegung des Zwischenkreises mit ähnlich hohen Spannungen wie etwa bei Parallelschwingkreisumrichtern üblich, würde beim Serienschwingkreisumrichter zu untragbar hohen Ofenspannungen führen. Aus diesen Gründen ist die Flexibilität bei der Anordnung der Komponenten in der Anlage stark eingeschränkt. Weiterhin ist die zur Leistungsregelung erforderliche Variation der Ausgangsfrequenz bei manchen Anwendungen von Nachteil. Als weiterer wichtiger Nachteil des Serienschwingkreisumrichters muß angeführt werden, daß der Schutz der Ventile bei bestimmten Fehlerfällen, etwa dem Ausfall der Steuersignale, sehr problematisch ist, da dann die Zwischenkreisspannung unkontrolliert ansteigen kann.

Schaltungen mit Resonanztransformation lassen sich nur bei hohen Frequenzen einsetzen, da bei niedrigen Frequenzen die Entkopplungsdrossel nicht mit vertretbarem Aufwand ausgeführt werden kann.

Schaltungen, bei denen auf die Kompensation verzichtet wird, können nur dann wirtschaftlich ausgeführt werden, wenn der Leistungsfaktor der Last ausreichend groß ist.

Zusammenfassend kann man sägen, daß alle Konzepte mit Spannungszwischenkreis Vorteile hinsichtlich des Netzverhaltens und der Möglichkeit zur unabhängigen Speisung mehrerer Lasten bieten und alle Konzepte mit Parallelschwingkreis den Vorteil bieten, daß der Umrichterstrom relativ klein gehalten werden kann.

Der Erfindung liegt daher die Aufgabe zu Grunde, die Vorteile von Umrichtern mit Spannungszwischenkreis mit den Vorteilen von Umrichtern mit Parallelschwingkreis zu vereinen. Hierbei wird eine Lösung angestrebt, die sich im Gegensatz zur Schaltung mit Resonanztransformation auch bei niedrigen Frequenzen wirtschaftlich ausführen läßt.

Diese Aufgabe wird erfindungsgemäß gelöst durch die Merkmale des Patentanspruches 1.

Vorteilhafte Weiterbildungen der erfindungsgemäßen Anwendung ergeben sich aus den Unteransprüchen.

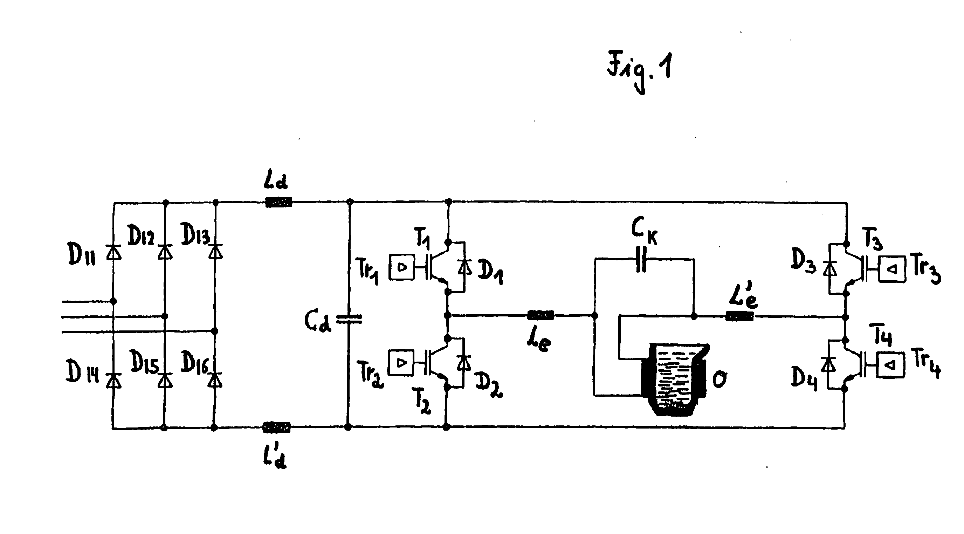

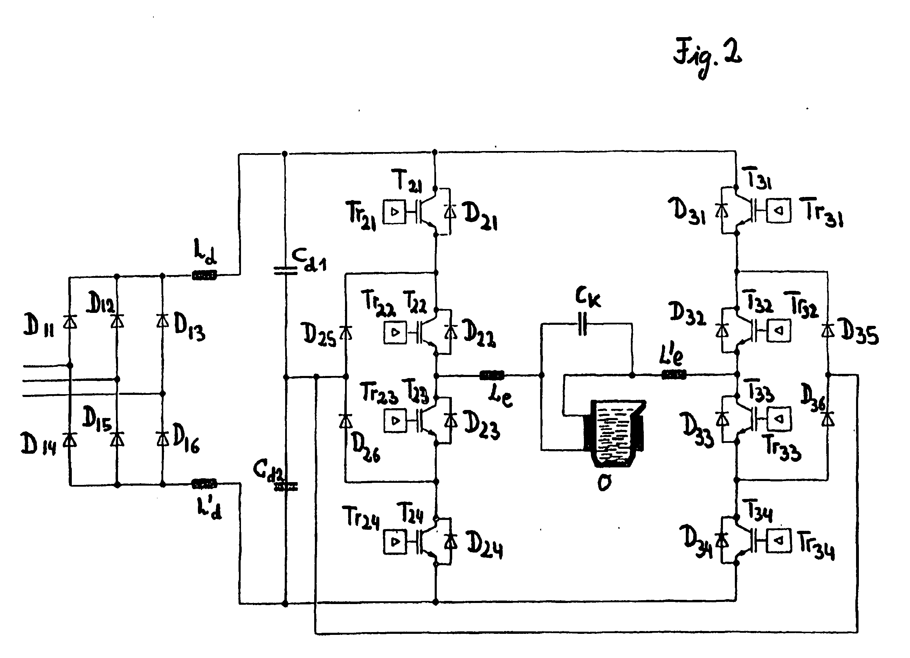

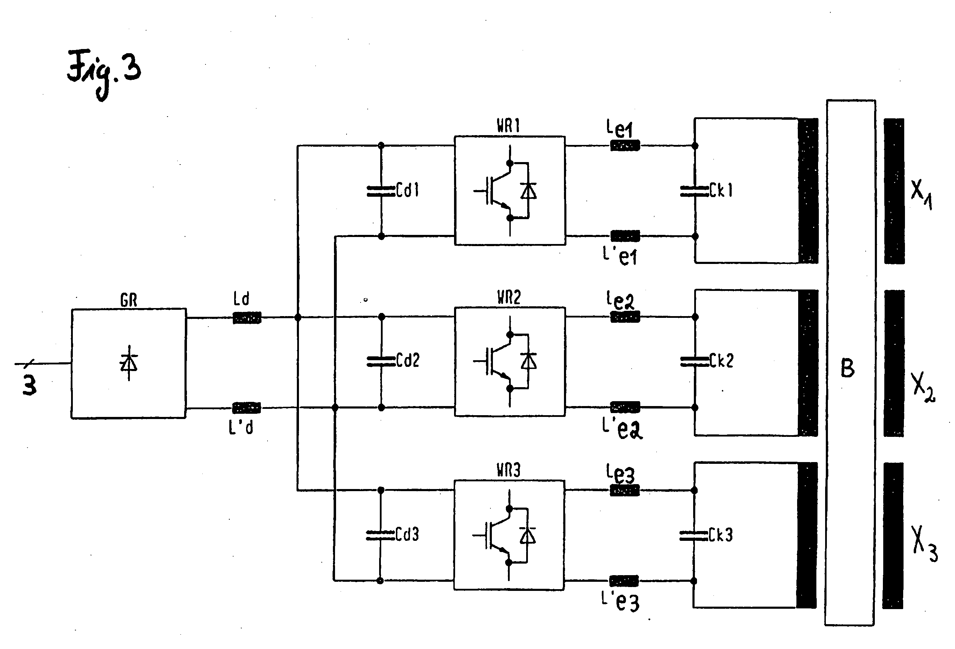

Die beigefügte Figur 1 zeigt ein Anwendungsbeispiel zur Versorgung eines Induktionstiegelofens O. Ein ungesteuerter Gleichrichter in B6-Schaltung (D₁₁ - D₁₆) speist über eine Glättungsdrossel ( L_{d}, L_{d}') einen Spannungszwischenkreis bestehend aus dem Zwischenkreiskondensator C_{d}. Die Glättungsdrossel ( L_{d}, L_{d}') dient lediglich der Begrenzung von Oberschwingungen im Netzstrom. Aus dem Spannungszwischenkreis wird ein selbstgeführter Wechselrichter in B2-Schaltung gespeist. Im hier dargestellten Beispiel ist der Wechselrichter aus vier IGBTs ( T₁-T₄ ) mit zugehörigen Treiberstufen ( Tr₁ -Tr₄ ) aufgebaut. Die Entkopplungsdrossel ( Lₑ, Lₑ' ) verbindet den Ausgang des Wechselrichters mit der Last (Ofen: O) und dem zur Last parallel angeordneten Kompensationskondensator C_{K}.

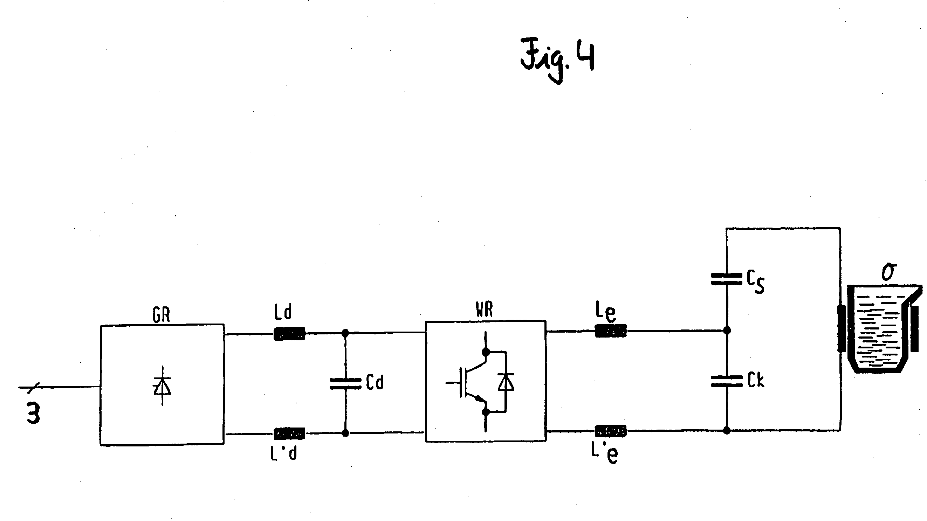

Falls bei großen Leistungen höhere Ausgangsspannungen gewünscht werden, kann der Wechselrichter alternativ aus Dreipunkt-Wechselrichter-Zweigen wie in Figur 2 gezeigt, aufgebaut werden. Hierbei besteht der Zwischenkreis aus zwei in Serie geschalteten Kondensatoren C_{d1} und C_{d2}. Die beiden Wechselrichterzweige bestehen jeweils aus vier IGBTs (T₂₁ - T₂₄ und T₃₁ - T₃₄), den zugehörigen Antiparallel-Dioden (D₂₁ - D₂₄ und D₃₁ - D₃₄) sowie den jeweils zwei Mittelpunktsdioden (D₂₅ und D₂₆ sowie D₃₅ und D₃₆). Der Ausgang der Wechselrichterzweige ist über die Entkopplungsdrossel (Lₑ. L'ₑ) mit der parallel kompensierten Last (Cₖ, O) verbunden.

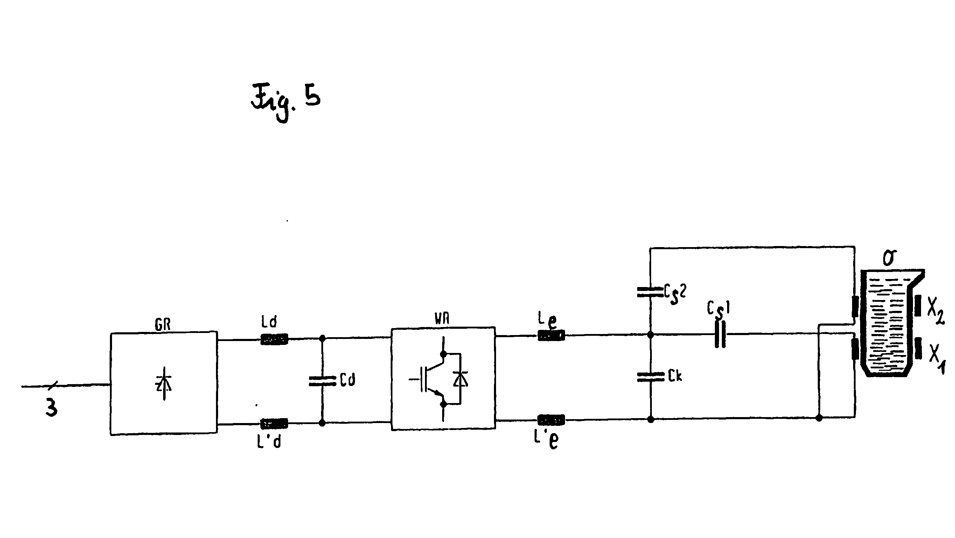

Eine Anlage, bei der mehrere Induktoren auf ein Werkstück arbeiten, ist in Figur 3 dargestellt. Ein Gleichrichter GR speist über eine Glättungsdrossel (L_{d}, L'_{d}) einen Gleichspannungszwischenkreis, bestehend aus den Glättungskondensatoren C_{d1}-C_{d3}. An diesen Zwischenkreis sind drei IGBT-Wechselrichter (WR₁, WR₂, WR₃) angeschlossen, die über jeweils eine Entkopplungsdrossel (Lₑ₁ und L'ₑ₁ bis Lₑ₃ und L'ₑ₃) jeweils eine der drei parallel kompensierten Spulen (X₁, X₂, X₃) versorgen. Die drei Spulen (X₁, X₂, X₃) arbeiten auf ein gemeinsames Werkstück B und sind damit über das Werkstück gekoppelt.

Als Steuerverfahren können alle Varianten der Pulsweitenmodulationsverfahren angewendet werden, wie sie aus anderen Anwendungen solcher Umrichter bekannt sind.

Sowohl der Aufbau des Leistungsteils solcher Anlagen als auch die Steuerverfahren sind aus anderen Anwendungen, insbesondere der Antriebstechnik, bekannt. Auch die Ankopplung einer parallel kompensierten Last über eine Entkopplungsdrossel ist für die Anwendung des Vereinzelns und Entstapelns von Blechplatinen mit einem Wanderfeldinduktor (DE 4423783 C2) bekannt.

Bei bekannten Anwendungen werden in der Regel dreiphasige Lasten gespeist. Im Unterschied dazu sind bei Anlagen zum induktiven Erwärmen oder induktiven Schmelzen einphasige Lasten zu Versorgen. Dies erfordert eine andere Auslegung des Zwischenkreises und den Einsatz modifizierter Steuerverfahren.

Erstaunlicherweise ist der Einsatz von pulsweitenmodulierten Wechselrichtern mit Spannungszwischenkreis für die induktive Erwärmung und das induktive Schmelzen bislang nicht bekannt. Hintergrund hierzu sind vermutlich wirtschaftliche Überlegungen, nach denen der Einsatz von abschaltbaren Leistungshalbleitern wirtschaftlich nicht zu rechtfertigen ist, wenn alternativ auch lastgeführte Schaltungen möglich sind. Hierbei wurde jedoch nicht berücksichtigt, welche Vorteile durch den Einsatz abschaltbarer Leistungshalbleiter für die Gesamtanlage zu erzielen sind. Weiterhin muß berücksichtigt werden, daß abschaltbare Leistungshalbleiter auf Grund der rasch fortschreitenden Entwicklung und des breiten Einsatzes in der Antriebstechnik zu immer geringeren Kosten verfügbar sind.

Das erfindungsgemäße Verfahren ermöglicht den Aufbau von Induktionsanlagen, die einerseits alle Vorteile von Umrichtern mit Spannungszwischenkreis bieten und andererseits auf Grund der Verwendung der Parallelkompensation mit so hohen Spannungen ausgelegt werden können, daß einerseits eine flexible Anordnung der Anlagenkomponenten möglich ist und andererseits ein hoher Wirkungsgrad der Gesamtanlage erreicht wird.

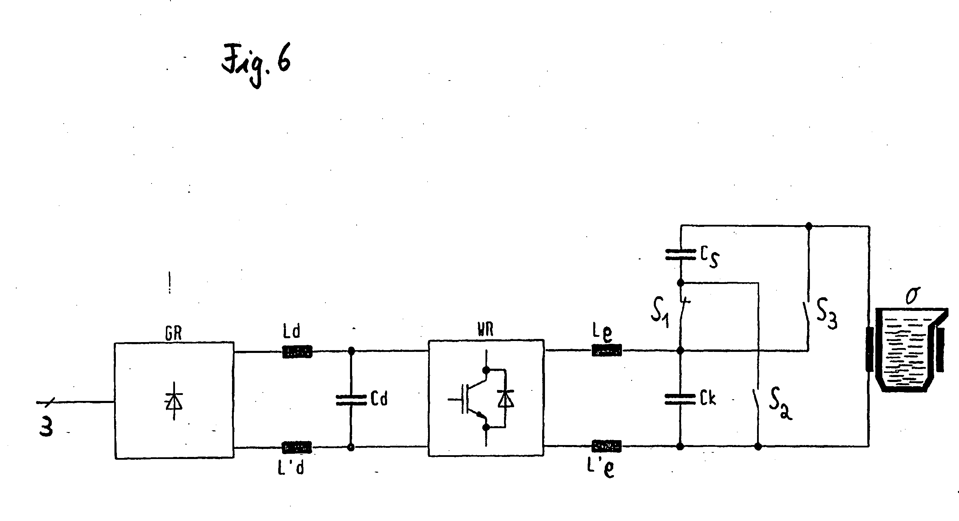

Weiterhin ist es von Vorteil, daß das erfindungsgemäße Verfahren mit allen bei Parallelschwingkreisumrichtern üblichen Schaltungsvarianten des Lastkreises kombiniert werden kann. Hierbei ist insbesondere zu nennen:
- Reihenschaltung eines Kondensators zur Ofenspule zur Spannungserhöhung an der Ofenspule (kapazitive Ankopplung). Die Schaltungsvariante des Lastkreises ist bekannt aus der Schrift DE 1 563 132 A. Figur 4 zeigt hierzu einen Ofen (O), der durch eine Reihenschaltung zweier Kondensatoren (Cₛ, Cₖ) kompensiert wird und einen Umrichter, der -ähnlich ausgeführt wie in Figur 1- seine Leistung zwischen einem der Anschlüsse des Ofens und der Verbindung von Cₖ und Cₛ einspeist,
- Ankopplung in axialer Richtung übereinander angeordneter Spulen über getrennte Reihenkondensatoren zum Zweck automatischer Leistungsverschiebung in den bedeckten Teil der Spule (Figur 5). Die Schaltungsvariante des Lastkreises ist bekannt aus der Schrift EP 0 752 194 B1. Durch Anordnung schaltbarer Kondensatorgruppen für die Reihenkondensatoren kann die Leistungsverschiebung gezielt beeinflußt werden, und
- Umschaltungen zur Frequenzumschaltung entweder entsprechend Figur 6 oder entsprechend der Schrift EP 0 744 117 B1. Bei der Anordnung nach Figur 6 ist eine Anlage mit kapazitiver Ankopplung mit drei Schaltern S₁ - S₃ derart ergänzt, daß diese eine Umschaltung zwischen dem Betrieb mit kapazitiver Ankopplung (S₁ geschlossen) und dem Betrieb mit direkter Ankopplung ( S₂ und S₃ geschlossen) ermöglichen.

Gegenüber Anlagen mit Resonanztransformation wird durch Verwendung von PWM-Verfahren im Wechselrichter erreicht, daß die Größe der Entkopplungsinduktivität und damit die Kosten, der Platzbedarf und die Verlustleistung soweit reduziert werden, daß solche Anlagen auch für niedrige Frequenzen wirtschaftlich ausgeführt werden können.

Im Vergleich zu Anlagen, bei denen ein selbstgeführter Umrichter die Last ohne Kompensation speist, können Umrichter nach dem hier beschriebenen Konzept für Lasten mit beliebigem Leistungsfaktor wirtschaftlich ausgeführt werden.

## Patentansprüche

1. Anwendung von selbstgeführten Spannungszwischenkreisumrichtern, bestehend aus jeweils einem oder mehreren Gleichrichter(n) (GR) und einem oder mehreren Wechselrichter(n) (WR), für die Stromversorgung von einem Induktionsofen oder mehreren Induktionsöfen und/oder einem Induktor oder mehreren Induktoren zum induktiven Schmelzen und/oder induktiven Erwärmen, wobei die Verbindung des/der Wechselrichter(s) (WR) mit dem parallel kompensierten Lastkreis (Cₖ) über (eine) Entkopplungsdrossel(n) (Lₑ, L'ₑ) erfolgt,
**dadurch gekennzeichnet, dass**
der/die Wechselrichter (WR) aus vier IGBTs aufgebaut ist/sind und diesen IGBTs jeweils Antiparallel-Dioden parallel geschaltet sind und für den/die Wechselrichter (WR) eine Schaltfrequenz verwendet wird, die größer ist als die Frequenz des Ausgangsstromes des jeweiligen Wechselrichters (WR).

2. Anwendung nach Anspruch 1, wobei mehrere Wechselrichter (WR) zur Speisung mehrerer Induktoren bzw. Induktionsöfen eingesetzt werden.

3. Anwendung nach Anspruch 1, wobei mehrere Wechselrichter (WR) parallel auf einen gemeinsamen Induktor bzw. Induktionsofen arbeiten.

4. Anwendung nach Anspruch 1 oder 3, wobei die Wechselrichter (WR) über eine gemeinsame Entkopplungsdrossel mit dem Induktor bzw. dem Induktionsofen verbunden werden.

5. Anwendung nach Anspruch 1 oder 3, wobei die Wechselrichter (WR) über getrennte Entkopplungsdrosseln mit dem/den Induktor(en) bzw. den Induktionsöfen verbunden werden.

6. Anwendung nach Anspruch 1, wobei mehrere Wechselrichter (WR) auf mehrere gekoppelte Induktoren (X) arbeiten.

7. Anwendung nach Anspruch 1 oder 6, wobei zur Erzeugung der Steuersignale Referenzsignale gleicher Frequenz und konstanter Phasenlage verwendet werden und die Leistungen der Induktoren durch unabhängige Vorgabe der Amplituden beliebig eingestellt werden können.

8. Anwendung nach einem der Anspruche 1 und 6, wobei zur Erzeugung der Steuersignale ein Referenzsignal verwendet wird, das ein Gemisch aus sinusförmigen Signalen verschiedener Frequenzen ist, um über die Amplituden der verschiedenen Frequenzanteile Erwärmung und Badbewegung unabhängig voneinander einstellen zu können.

9. Anwendung nach einem der vorhergehenden Ansprüche, wobei die Spannung an dem/den Induktor(en) bzw. den Induktionsöfen erhöht wird, indem in Reihe zu dem Induktor oder Induktions ofen oder jedem der Induktoren oder Induktionsöfen ein zusätzlicher Kondensator geschaltet wird.

10. Anwendung nach einem der vorhergehenden Ansprüche, wobei durch schaltbare Kondensatorgruppen eine Frequenzumschaltung für den Ausgangsstrom erreicht wird.

11. Anwendung nach einem der vorhergehenden Ansprüche, wobei durch Umschaltung zwischen Reihen- und Parallelschaltung mehrerer Teilinduktoren eine Frequenzumschaltung erreicht wird.

## Claims

1. An application of self-commutated intermediate voltage circuit converters, consisting in each case of one or a plurality of rectifier(s) (GR) and one or a plurality of inverter (s) (WR) for the power supply of an induction furnace or a plurality of induction furnaces and/or an inductor or a plurality of inductors for inductive melting and/or inductive heating, wherein
the connection of the inverter(s) (WR) with the parallel compensated load circuit (Cₖ) takes place via (a) decoupling choke(s) (Lₑ, L'ₑ),
**characterised in that**
the inverter(s) (WR) is/are constructed from four IGBTs, and these IGBTs are in each case connected in parallel with antiparallel diodes, and a switching frequency is used for the inverter (s) (WR) that is greater than the frequency of the output current of the respective inverter (WR).

2. Use according to Claim 1, with a number of inverters (WR) being used for feeding a number of inductors or induction furnaces.

3. Use according to Claim 1, with a number of inverters (WR) operating in parallel with one common inductor or induction furnace.

4. Use according to Claim 1 or 3, with inverters (WR) being connected via a common decoupling inductor to the inductor or to the induction furnace.

5. Use according to Claim 1 or 3, with the inverters (WR) being connected via separate decoupling inductors to the inductor or inductors or to the induction furnaces.

6. Use according to Claim 1, with a number of inverters (WR) operating with a number of coupled inductors (X).

7. Use according to Claim 1 or 6, with reference signals at the same frequency and with a constant phase angle being used for producing the control signals, and in which the power levels of the inductors can be set as required by independently presetting the amplitudes.

8. Use according to one of Claims 1 and 6, with a reference signal which is a mixture of sinusoidal signals at different frequencies being used to produce the control signals, in order to make it possible to adjust the heating and bath movement independently of one another via the amplitudes of the various frequency components.

9. Use according to one of the preceding claims, with the voltage applied to the inductor or inductors or to the induction furnace being increased by connecting an additional capacitor in series with the inductor or induction furnace, or with each of the inductors or induction furnaces.

10. Use according to one of the preceding claims, with frequency switching for the output current being achieved by switchable capacitor groups.

11. Use according to one of the preceding claims, with frequency switching being achieved by switching between series connection and parallel connection of a number of inductor elements.

## Revendications

1. Application de convertisseurs à circuit intermédiaire de tension à commutation automatique, composés à chaque fois d'un ou de plusieurs redresseurs (GR) et d'un ou de plusieurs onduleurs (WR) pour l' alimentation électrique d'un four à induction ou de plusieurs fours à induction et/ou d'un inducteur ou de plusieurs inducteurs pour la fusion par induction et/ou pour le chauffage par induction, la liaison du ou des onduleur(s) (WR) avec le circuit de charge à compensation parallèle (C_{K}) étant réalisée par le biais d'une ou de plusieurs bobines(s) de découplage (Lₑ, L'ₑ), **caractérisée en ce que** le/les onduleurs(s) est/sont formé(s) par quatre IGBT et que des diodes antiparallèles sont montées en parallèle à chacun de ces IGBT, et **en ce qu'**une fréquence de commutation utilisée pour le/les onduleur(s) (WR) supérieure à la fréquence du courant de sortie de l'onduleur (WR) correspondant.

2. Application selon la revendication 1, avec laquelle plusieurs onduleurs (WR) sont utilisés pour alimenter plusieurs inducteurs ou fours à induction.

3. Application selon la revendication 1, avec laquelle plusieurs onduleurs (WR) agissent en parallèle sur un inducteur ou un four à induction commun.

4. Application selon la revendication 1 ou 3, avec laquelle les onduleurs (WR) sont reliés à l'inducteur ou au four à induction par le biais d'une bobine de découplage commune.

5. Application selon la revendication 1 ou 3, avec laquelle les onduleurs (WR) sont reliés au ou aux inducteurs ou au ou aux fours à induction par le biais de bobines de découplage séparées.

6. Application selon la revendication 1, avec laquelle plusieurs onduleurs (WR) agissent sur plusieurs inducteurs (X) couplés.

7. Application selon la revendication 1 ou 6, avec laquelle des signaux de référence ayant la même fréquence et la phase constante sont utilisés pour générer les signaux de commande et les puissances des inducteurs peuvent être réglées à volonté par des indications indépendantes des amplitudes.

8. Application selon l'une des revendications 1 et 6, avec laquelle un signal de référence est utilisé pour générer les signaux de commande, lequel est un mélange de signaux sinusoïdaux de différentes fréquences, pour pouvoir régler indépendamment l'un de l'autre le chauffage et l'agitation du bain par le biais des amplitudes des différentes portions de la fréquence.

9. Application selon l'une des revendications précédentes, avec laquelle la tension appliquée au ou aux inducteurs ou aux fours à induction est augmentée en branchant un condensateur supplémentaire en série avec l'inducteur ou le four à induction ou avec chacun des inducteurs ou fours à induction.

10. Application selon l'une des revendications précédentes, avec laquelle une commutation de fréquence pour le courant de sortie est obtenue à l'aide de groupes de condensateurs commutables.

11. Application selon l'une des revendications précédentes, avec laquelle une commutation de fréquence est obtenue par une commutation entre un branchement en série et un branchement en parallèle de plusieurs inducteurs partiels.
